# EUROPÄISCHE PATENTSCHRIFT

(11) **EP 3 509 867 B1**
(45) Veröffentlichungstag und Bekanntmachung des Hinweises auf die Patenterteilung: **10.11.2021**
(21) Anmeldenummer: 17768360.4
(22) Anmeldetag: 04.09.2017
(51) Int. Cl.: B42D 25/36, B44C 5/04

(54) **KARTENFÖRMIGER DATENTRÄGER MIT NATÜRLICHEN MATERIALIEN, VERFAHREN UND VORRICHTUNG ZUR DESSEN HERSTELLUNG.**
CARD-SHAPED DATA CARRIER WITH NATURAL MATERIALS, METHOD AND DEVICE FOR THE PRODUCTION THEREOF
SUPPORT DE DONNÉES EN FORME DE CARTE COMPRENANT DES MATIÈRES NATURELLES, PROCÉDÉ ET DISPOSITIF POUR SA FABRICATION

(30) Priorität: 07.09.2016 DE 102016010864
(43) Veröffentlichungstag der Anmeldung: 17.07.2019
(73) Patentinhaber: Giesecke+Devrient Mobile Security GmbH, 81677 München (DE)
(72) Erfinder: ENDRES, Günter, 81547 München (DE); TARANTINO, Thomas, 83410 Laufen (DE)
(74) Vertreter: Giesecke + Devrient IP
(86) Internationale Anmeldenummer: PCT/EP2017/001043
(87) Internationale Veröffentlichungsnummer: WO 2018/046123

(56) Entgegenhaltungen:
- WO-A1-96/23276
- WO-A1-96/23276
- DE-U1-202010 002 106
- DE-U1-202010 002 106
- US-A1- 2005 216 350
- US-A1- 2005 216 350
- US-A1- 2013 287 267
- US-A1- 2013 287 267
- US-A1- 2015 298 429
- US-A1- 2015 298 429

## Beschreibung

Die vorliegende Erfindung ist gerichtet auf ein Verfahren zum Herstellen eines kartenförmigen Datenträgers, bei dem in besonders vorteilhafter Weise ein Naturmaterial, beispielsweise Holz, verbaut wird. Die Erfindung ist ferner gerichtet auf eine entsprechend eingerichtete Vorrichtung zur Herstellung des kartenförmigen Datenträgers sowie auf den Datenträger selbst. Ferner wird ein Computerprogrammprodukt vorgeschlagen, mit Steuerbefehlen, welche das Verfahren implementieren bzw. die vorgeschlagene Vorrichtung betreiben.

WO 2015/051867 A1 zeigt ein Verfahren zur Herstellung eines tragbaren Datenträgers, wobei zur Herstellung des Datenträgers mindestens eine erste Kunststofffolie verwendet wird, wobei die mindestens erste Kunststofffolie mit Klebstoff beschichtet, gefaltet und zu einem Verbund verklebt wird, wobei der Datenträger aus dem Verbund ausgestanzt wird.

DE 20 2010 002106 U1 zeigt einen kartenförmigen Datenträger, welcher als Identitätsdokument oder zur Berechtigungskontrolle einsetzbar ist, und der aus einem Laminatschichtaufbau besteht, wobei die einzelnen Laminatschichten jeweils aus Echtholz bestehen und der Verlauf der Holzfasern benachbarter Holzschichten in unterschiedlichen Richtungen ausgerichtet ist.

EP 2193 897 A1 zeigt einen Verbundwerkstoff auf Basis eines Holzfurniers, wobei das Holzfurnier mit einer Schichtstärke von 0,2 bis 1,5 mm mindestens einseitig mittels eines Klebstoffes mit einem reißfesten Film verbunden ist.

US 2013/287267A1 beschreibt eine Chipkarte mit einer ersten sichtbaren Lage, die ein natürliches Material mit einem einzigartigen sichtbaren Muster enthält. Ein Speichergerät speichert ein Referenzmuster, um es mit dem Muster der Chipkarte zur Authentisierung zu vergleichen. Ferner wird ein Authentisierungsverfahren beschrieben, das in der Chipkarte gespeichert ist. US 2015/298429A1 beschreibt Transaktions- und Identifikationskarten, die aus einer oder mehreren Lagen von Bambusfasern bestehen, welche optional auf einem Papierträger angeordnet sind. Eine oder mehrere graphische Schichten werden entweder auf die Bambuslage gedruckt oder darauf laminiert. Optional werden weitere Schutzschichten auf die Bambuslage aufgebracht.

Während herkömmliche kartenförmige Datenträger, beispielsweise Kreditkarten, aus Kunststoffmaterialien hergestellt werden, so bieten diverse Finanzdienstleister Kreditkarten an, welche besonders edel ausgearbeitet sind. So ist es beispielsweise bekannt, an Kunden Kreditkarten auszugeben, welche aus Metall hergestellt sind und sich somit von typischerweise verwendeten Kreditkarten abheben. Hierbei steht oftmals nicht lediglich die Qualität der Kreditkarte an sich im Vordergrund, sondern vielmehr geht es darum, ein Alleinstellungsmerkmal für einzelne, beispielsweise besonders solvente Kunden, zu schaffen.

Hierzu ist es auch bekannt, Kreditkarten bereitzustellen, welche an mindestens einem Teil der Oberfläche eine Holzstruktur aufweisen. Dies kann derart hergestellt werden, dass tatsächlich echtes Holz verbaut wird, oder aber auch der Kunststoff wird derart geformt, dass er eine holzartige Oberflächenstruktur und Farbgebung aufweist. Hierbei ist es jedoch besonders nachteilig, dass diese Kreditkarten gemäß herkömmlicher Verfahren hergestellt werden, welche es typischerweise vorsehen, dass mehrere Schichten übereinandergelegt und zusammenlaminiert werden. Dieses Laminieren ist besonders schädlich für die verwendeten Naturmaterialien, wobei es bei einem Heißlaminieren zu einer Veränderung des Materials kommen kann. Unter Einfluss der Hitze ist es besonders nachteilig, dass die einzelnen Schichten Unebenheiten bekommen können bzw. sich wölben.

Zur Herstellung von solchen Karten mit Naturmaterialien gibt es diverse Veröffentlichungen, die beispielsweise vorschlagen, den Charakter der verwendeten Materialien mittels einer Drucktechnologie zu simulieren. Der Prozess der Herstellung dieser Karten ist sehr aufwendig und erfüllt aufgrund des spröden, harten Charakters der eingesetzten Materialien nicht in jedem Fall auch die bestehenden ISO-Anforderungen. Zudem kommt der typische Charakter dieser Materialien, insbesondere bei Kartenausführungen, die den Naturcharakter über Drucktechniken simulieren, nicht ausreichend zur Geltung.

Ferner ist es gemäß herkömmlicher Verfahren nachteilig, dass oftmals die eingesetzten Naturmaterialien nicht biegfest sind und daher bei Stärkerbelastung der jeweiligen Kreditkarte brechen können. Somit kann es jeweils der Fall sein, dass eine Kreditkarte nach dem Herstellungsprozess bereits unbrauchbar ist, da das verwendete Naturmaterial entweder gebrochen ist oder aufgrund der Hitzeeinwirkung des Laminierens der Schichten verformt ist bzw. eine ungewollte Farbgebung aufweist. Ferner kommt es typischerweise gemäß herkömmlicher Verfahren zu Problemen mit verbauten elektronischen Elementen, welche eine Funktionalität der Kreditkarte bereitstellen. Es ist daher eine Aufgabe der vorliegenden Erfindung, ein Verfahren zum Herstellen eines kartenförmigen Datenträgers vorzuschlagen, welches es ermöglicht, Naturmaterialien in ästhetisch ansprechender und stabiler Weise in dem Datenträger mit geringem technischen Aufwand zu verbauen. Ferner ist es eine Aufgabe der vorliegenden Erfindung, ein entsprechendes Wertdokument bzw. einen kartenförmigen Datenträger bereitzustellen.

Die Aufgabe wird gelöst durch ein Verfahren mit den Merkmalen des Patentanspruchs 1 und durch einen kartenförmigen Datenträger mit den Merkmale des Anspruchs 9. Weitere vorteilhafte Ausgestaltungen sind in den Unteransprüchen angegeben.

Demgemäß wird ein Verfahren zum Herstellen eines kartenförmigen Datenträgers bzw. eines Wertdokuments mit natürlichen Materialien vorgeschlagen. Hierbei erfolgt ein Bereitstellen einer kartenförmigen Trägerschicht und ein Bereitstellen einer kartenförmigen Dekorschicht, wobei die Dekorschicht ein natürliches Material aufweist und auf die Trägerschicht aufgeklebt wird.

Bei einem kartenförmigen Datenträger kann es sich generell um ein Wertdokument handeln, beispielsweise eine Kreditkarte, eine Personalausweiskarte, einen Führerschein, eine Krankenversicherungskarte oder generell eine Ausweiskarte. Der Datenträger kann hierbei eingerichtet sein, Daten derart bereitzustellen, dass diese lediglich oberflächlich auf dem Datenträger beispielsweise mittels Drucktechnologien oder ähnlichen Technologien aufgebracht werden. Ferner ist es jedoch auch möglich, elektronische Bauelemente vorzusehen, welche Daten abspeichern mitsamt elektronischer Bauelemente, welche diese Daten verarbeiten bzw. bereitstellen. So ist es erfindungsgemäß vorteilhaft, dass der vorgeschlagene kartenförmige Datenträger bzw. das Verfahren zum Herstellen des kartenförmigen Datenträgers es ermöglichen, dass herkömmliche Informationen bzw. Sicherheitsmerkmale weiterhin zu verwenden sind. So kann auch ein Sicherheitsmerkmal in den vorgeschlagenen kartenförmigen Datenträger eingebracht werden, beispielsweise auf der vorgeschlagenen Dekorschicht,

Bei dem Bereitstellen einer kartenförmigen Trägerschicht kann es sich um eine solche Schicht handeln, wie sie typischerweise in herkömmlichen Kreditkarten verbaut wird. Beispielsweise werden hierzu mehrere Kunststoffschichten gestapelt bzw. aufeinandergelegt und zusammenlaminiert. So kann die kartenförmige Trägerschicht zumindest einen Teil eines Kartenkörpers einer herkömmlichen Kreditkarte darstellen. Hierbei ist es besonders vorteilhaft, die kartenförmige Trägerschicht dünner auszugestalten als bekannte Kreditkarten, da additiv eine Klebeschicht und eine Dekorschicht auf der bereitgestellten Trägerschicht vorzusehen sind.

Auch ist es vorteilhaft, in die kartenförmige Trägerschicht bereits elektronische Bauelemente je nach Bedarf einzubringen und diese zumindest teilweise einzulaminieren. Somit können einige Bauelemente bereits in der Trägerschicht angeordnet werden, können aber auch in der Dekorschicht angeordnet werden. Ferner ist es möglich, dass die Bauelemente derart angeordnet sind, dass diese sowohl in der Trägerschicht als auch in der Dekorschicht verbaut sind und hierbei die Klebeschicht durchbrechen. Somit kann mindestens ein elektronisches Bauelement teilweise in der Trägerschicht angeordnet sein, wobei der andere Teil des elektronischen Bauelements in der Dekorschicht verbaut ist. Somit umschließen die Trägerschicht und die Dekorschicht das elektronische Bauelement.

Ferner erfolgt ein Bereitstellen einer kartenförmigen Dekorschicht, die ein natürliches Material aufweist. Als ein natürliches Material gilt hierbei jegliches Naturmaterial, wobei dieses Naturmaterial vollflächig in der Dekorschicht vorhanden sein kann, oder aber auch lediglich Partikel davon. Folglich ist es möglich, dass die Dekorschicht komplett aus dem Naturmaterial besteht, oder aber auch, dass das Naturmaterial zu Fasern oder allgemein Teilstücken verarbeitet ist, und in die Dekorschicht eingebracht ist. Ferner ist es gemäß einem Aspekt der vorliegenden Erfindung auch möglich, die Dekorschicht derart auszugestalten, dass mehrere Naturmaterialien Einsatz finden. So ist es beispielsweise möglich, die Dekorschicht zu einem Teil komplett aus Holz herzustellen und zu einem weiteren Teil aus einem Metall oder Stein. Der Fachmann kennt hierbei weitere natürliche Materialien, welche erfindungsgemäß verbaut werden können.

Ferner wird die Dekorschicht, welche ein natürliches Material aufweist, auf die Trägerschicht aufgeklebt. Dies ist insbesondere gegenüber bekannten Verfahren besonders vorteilhaft, da es nicht zu Verformungen der jeweiligen Schichten kommen kann. Wie eingangs diskutiert wurde, ist es gemäß herkömmlichen Verfahren üblich, die einzelnen Schichten aufzulaminieren und dann auszustanzen. Erfindungsgemäß erfolgt jedoch das Einbringen einer Klebeschicht zwischen der Dekorschicht und der Trägerschicht bzw. ein Aufkleben der Dekorschicht auf die Trägerschicht. Somit wird nicht nur ein Wölben bzw. ein Verformen der jeweiligen Schichten vermieden, sondern vielmehr bietet die eingebrachte Klebeschicht an sich einen besonderen Schutz für den vorgeschlagenen kartenförmigen Datenträger. So kann beispielsweise die Klebeschicht derart flexibel ausgestaltet werden, dass, falls die Kreditkarte gebogen wird, sich die Klebeschicht entsprechend verformt und somit verhindert, dass die weiteren Materialien bzw. die weiteren Schichten brechen bzw. reißen. Somit stellt die Klebeschicht einen gewissen Puffer dar, der Belastungen auf den kartenförmigen Datenträger abfedert bzw. minimiert. Somit wird es auch erfindungsgemäß vermieden, dass die einzelnen Schichten des Kartenkörpers fest aufeinanderlaminiert sind, sondern vielmehr bilden diese Schichten eine flexible Einheit, welche auch bei Biegungen des kartenförmigen Datenträgers mit nachgeben. Somit wird erfindungsgemäß ein besonders stabiler, brechsicherer und flexibler Datenträger bereitgestellt.

Gemäß einem Aspekt der vorliegenden Erfindung weist die Trägerschicht mindestens ein funktionales Element aus einer Gruppe von Elementen auf, die Gruppe umfassend einen Magnetstreifen, ein Chipmodul, einen Unterschriftsstreifen, eine Spule, einen Speicher und/oder einen Schaltkreis. Dies hat den Vorteil, dass beispielsweise die Trägerschicht, aber auch die Dekorschicht, jeweils unterschiedliche funktionelle Komponenten aufnehmen kann. So werden beispielsweise bei Smartcards, also einem kartenförmigen Datenträger, diverse elektronische Komponenten verbaut, welche eine Funktionalität bereitstellen. Hierbei ist es besonders vorteilhaft, dass diese elektronischen Komponenten in der Trägerschicht angeordnet werden können, da die Trägerschicht gemäß herkömmlichen Verfahren hergestellt werden kann. Werden beispielsweise Schichten innerhalb der Trägerschicht zusammenlaminiert, so können diese elektronischen Komponenten bereits in die einzelnen Schichten eingelegt werden und derart zusammenlaminiert werden, dass die erfindungsgemäße Trägerschicht entsteht. Somit ist es auch möglich, herkömmliche Verfahren zur Herstellung eines Kartenkörpers weiter zu verwenden, und lediglich diese Verfahren derart anzupassen, dass der Kartenkörper dünner ausgestaltet wird, so dass es möglich ist, eine Dekorschicht aufzukleben. So kann das erfindungsgemäße Verfahren mit geringem technischem Aufwand implementiert werden, und herkömmliche Herstellungsmaschinen müssen lediglich erfindungsgemäß angepasst werden.

Gemäß einem weiteren Aspekt der vorliegenden Erfindung umfasst die Trägerschicht mehrere Lagen, welche zusammenlaminiert werden. Dies hat den Vorteil, dass die Trägerschicht gemäß herkömmlicher Verfahren bereitgestellt werden kann und erfindungsgemäß lediglich mit der kartenförmigen Dekorschicht versehen werden muss, welche ein natürliches Material aufweist. So ist es möglich, zwar die Trägerschicht mittels Laminierens bereitzustellen, was jedoch nicht bedeutet, dass die Dekorschicht ebenfalls auflaminiert wird. Vielmehr ist es erfindungsgemäß vorteilhaft, dass die Dekorschicht aufgeklebt wird und hierzu die Trägerschicht lediglich als ein Rohling verwendet wird, der erfindungsgemäß aufgerüstet wird.

Gemäß einem weiteren Aspekt der vorliegenden Erfindung weist die Trägerschicht funktionale Elemente auf, welche jeweils vor oder nach einem Laminieren in die Trägerschicht eingebracht werden. Dies hat den Vorteil, dass die elektronischen Komponenten, welche eine Funktionalität des kartenförmigen Datenträgers bereitstellen, miteinlaminiert werden können, oder aber auch nach dem Laminieren in den Kartenkörper eingebracht werden können. So ist es beispielsweise möglich, zuerst die Trägerschicht bereitzustellen, dann Vertiefungen in die Trägerschicht einzubringen und ferner die Dekorschicht aufzusetzen. Ferner ist es erfindungsgemäß möglich, die funktionalen Elemente mindestens teilweise in die Dekorschicht einzubringen, wohingegen in der Trägerschicht Aussparungen vorgesehen sind. Somit lässt sich die Dekorschicht mitsamt der elektronischen Elemente in die Trägerschicht einpassen, so dass auch bei herausstehenden elektronischen Komponenten aus der Dekorschicht die Dekorschicht formschlüssig auf die Trägerschicht aufsetzt. Hierbei ist lediglich zwischen der Dekorschicht und der Trägerschicht eine Klebeschicht vorzusehen. Diese Klebeschicht muss generell aber nicht durchgängig ausgeformt sein. Das heißt also, dass die Klebeschicht mindestens einen Teil der innenliegenden Seite der Trägerschicht und der innenliegenden Seite der Dekorschicht beaufschlagt.

Gemäß einem weiteren Aspekt der vorliegenden Erfindung wird die Dekorschicht filmähnlich ausgestaltet. Dies hat den Vorteil, dass eine besonders dünne Klebeschicht vorgesehen wird, welche den Kartenkörper nur minimal verbreitert und insbesondere ermöglicht, dass die Dekorschicht ebenfalls ähnlich ausgestaltet wird, derart, dass sich lediglich eine Stärke des Kartenkörpers ergibt, die einer herkömmlichen Karte entspricht. Somit ist die Dekorschicht besonders dünn ausgestaltet und kann somit lediglich mehrere Mikrometer betragen.

Gemäß einem weiteren Aspekt der vorliegenden Erfindung ist die Dekorschicht biegsam ausgestaltet. Dies hat den Vorteil, dass auch bei starken Belastungen des kartenförmigen Datenträgers die Dekorschicht nicht reißt bzw. bricht, was insbesondere deshalb möglich ist, da die Dekorschicht filmähnlich ausgestaltbar ist. Somit kann die Dekorschicht entweder gebogen oder gestaucht werden und sorgt dafür, dass auf der Kartenoberfläche keine Risse oder Brüche entstehen.

Gemäß einem weiteren Aspekt der vorliegenden Erfindung wird die Dekorschicht als Dünnschichtfurnier bereitgestellt. Dies hat den Vorteil, dass bereits herkömmliche Herstellungsmaschinen aus anderen Domänen eingesetzt werden können und die bereitgestellte Trägerschicht beschichtet bzw. beklebt werden kann. So sind Dünnschichtfurniere aus anderen Domänen bereits bekannt, wobei erfindungsgemäß überraschenderweise entdeckt wurde, dass sich solche Dünnschichtfurniere auch zum Beschichten bzw. zum Bekleben von Kartenkörpern eignen. So finden solche Dünnschichtfurniere lediglich bei großflächigeren Anwendungsszenarien Einsatz. Deren Einsatz ist jedoch auch im Kontext der vorliegenden Erfindung besonders vorteilhaft, da somit mit geringem technischen Aufwand ein bereits erprobtes Verfahren eingesetzt werden kann.

Gemäß einem weiteren Aspekt der vorliegenden Erfindung erfolgt das Aufkleben mittels einem Haftklebestoff. Dies hat den Vorteil, dass die Dekorschicht derart ausgestaltet werden kann, dass sie mit dem Haftkleber beschichtet wird und somit in besonders einfacher Art und Weise die Dekorschicht mit der Trägerschicht verpresst werden kann. Somit ist es möglich, bereits vor einem Produktionsprozess die Dekorschicht mit dem Haftkleber zu versehen und lediglich bei dem Herstellungsprozess des kartenförmigen Datenträgers den Haftkleber zu aktivieren, so dass die Dekorschicht mit der Trägerschicht verklebt wird.

Gemäß einem weiteren Aspekt der vorliegenden Erfindung formt der Haftklebestoff eine flexible Klebeschicht zwischen der Trägerschicht und der Dekorschicht aus. Dies hat den Vorteil, dass der bereitgestellte Datenträger biegsam ist und somit verhindert wird, dass die natürlichen Materialien der Dekorschicht reißen bzw. brechen. Somit fungiert die Klebeschicht als ein Puffer, welcher beaufschlagte Kräfte abfedert.

Gemäß einem weiteren Aspekt der vorliegenden Erfindung weist die Trägerschicht und/oder die Dekorschicht mindestens einen Hohlraum zur Aufnahme eines elektronischen Bauelements auf. Dies hat den Vorteil, dass jegliche Art von Hohlräumen entweder in der Trägerschicht und/oder in der Dekorschicht vorzusehen sind. Ein Hohlraum ist hierbei nicht einschränkend zu verstehen, sondern vielmehr versteht der Durchschnittsfachmann hierbei, dass es sich um Aussparungen an der Oberfläche mindestens einer der beiden Schichten handeln kann. So kann das jeweilige elektronische Bauelement tatsächlich in die Trägerschicht oder die Dekorschicht eingebracht werden, das elektronische Bauelement kann jedoch auch aus der Trägerschicht bzw. aus der Dekorschicht herausragen und in die jeweils gegenüberliegende Schicht vordringen.

Gemäß einem weiteren Aspekt der vorliegenden Erfindung liegt das natürliche Material als Holz, Metall, Keramik oder Stein vor. Dies hat den Vorteil, dass bezüglich der Herstellung von kartenförmigen Datenträgern für diese Domäne neuartige Materialien vorgesehen werden, welche erfindungsgemäß besonders vorteilhaft zu einem Kartenkörper zusammengefügt werden. Hierbei erkennt der Fachmann, dass weitere natürliche Materialien erfindungsgemäß verwendet werden können. Hierbei ist ein natürliches Material ein Naturmaterial, d. h. also ein Material, welches nicht durch Herstellungsprozesse, beispielsweise chemische Herstellungsprozesse, erzeugt wird. So können beispielsweise auch Edelmetalle oder dergleichen mehr Verwendung finden. Insbesondere ist es möglich, die einzelnen Materialien derart zu mischen, dass mindestens ein erster Teil aus einem ersten Material besteht und ein zweiter Teil der Dekorschicht aus einem zweiten Material. Ferner ist es auch möglich, die natürlichen Materialien derart zu verarbeiten, dass diese ineinander übergehen können. So kann beispielsweise das Holz in einzelne Fasern bzw. Stücke zersetzt werden und hierbei mindestens ein weiteres Material eingebracht werden. Bevorzugt ist es jedoch, das natürliche Material jeweils alleine pro kartenförmigem Datenträger zu verbauen.

Gemäß der vorliegenden Erfindung weist die Trägerschicht eine Dicke von ca. 500-700 µm, die Dekorschicht eine Dicke von ca. 100-300 µm und/oder die Klebeschicht eine Dicke von ca. 10-100 µm auf. Dies hat den Vorteil, dass trotz des erfindungsgemäßen Aufbaus die erwartete Stärke bzw. Dicke einer herkömmlichen Kreditkarte eingehalten wird. Somit ist es möglich, dass die Trägerschicht derart ausgestaltet wird, dass deren Stärke der Karte bzw. dem kartenförmigen Datenträger eine gewisse Stabilität ermöglicht, während die Dekorschicht erfindungsgemäß besonders dünn ausgestaltet werden kann. Somit entsteht erfindungsgemäß eine besonders flexible Karte, da die Dekorschicht besonders dünn ausgestaltet werden kann und somit die verwendeten natürlichen Materialien nicht zu einem Brechen bzw. einem Reißen neigen. Hierbei wurde festgestellt, dass gerade die Dicke der vorgeschlagenen Dekorschicht von 100-300 µm vorteilhaft ist, da diese ausreichend dick ist, um die Struktur des natürlichen Materials widerzuspiegeln, aber dennoch dünn genug ist, um der Karte eine flexible und reißfeste Bauart zu ermöglichen. Ferner wurde festgestellt, dass bereits eine Stärke von 10-100 µm der Klebeschicht ausreicht, um die Dekorschicht mit der Trägerschicht ausreichend fest zu verbinden.

Die Aufgabe wird auch gelöst durch einen kartenförmigen Datenträger mit natürlichen Materialien, mit einer kartenförmigen Trägerschicht und einer kartenförmigen Dekorschicht, wobei die Dekorschicht ein natürliches Material aufweist und auf die Trägerschicht aufgeklebt ist.

Hierbei ist es besonders vorteilhaft, dass der kartenförmige Datenträger derart ausgestaltet werden kann, dass die einzelnen Verfahrensschritte strukturelle Merkmale eben dieses kartenförmigen Datenträgers ausgestalten. Ferner ist es möglich, mit dem vorgeschlagenen Verfahren das vorgeschlagene Werkzeug bzw. die Vorrichtung zur Herstellung des Datenträgers zu betreiben, derart, dass die Verfahrensschritte gemäß strukturellen Merkmalen in der Vorrichtung nachgebildet werden können. Insbesondere ist es vorteilhaft, dass die Vorrichtung strukturelle Merkmale aufweist, welche den vorgeschlagenen kartenförmigen Datenträger bereitstellen können.

Weitere vorteilhafte Ausgestaltungen werden anhand der beigefügten Figuren näher erläutert. Es zeigt:
- Fig. 1A/1B:: einen Schichtenaufbau eines kartenförmigen Datenträgers gemäß einem bekannten Verfahren;
- Fig. 2:: einen kartenförmigen Datenträger mit natürlichen Materialien gemäß einem Aspekt der vorliegenden Erfindung;
- Fig. 3:: einen kartenförmigen Datenträger mit natürlichen Materialien gemäß einem weiteren Aspekt der vorliegenden Erfindung; und
- Fig. 4:: ein Verfahren zum Herstellen eines kartenförmigen Datenträgers gemäß einem Aspekt der vorliegenden Erfindung.

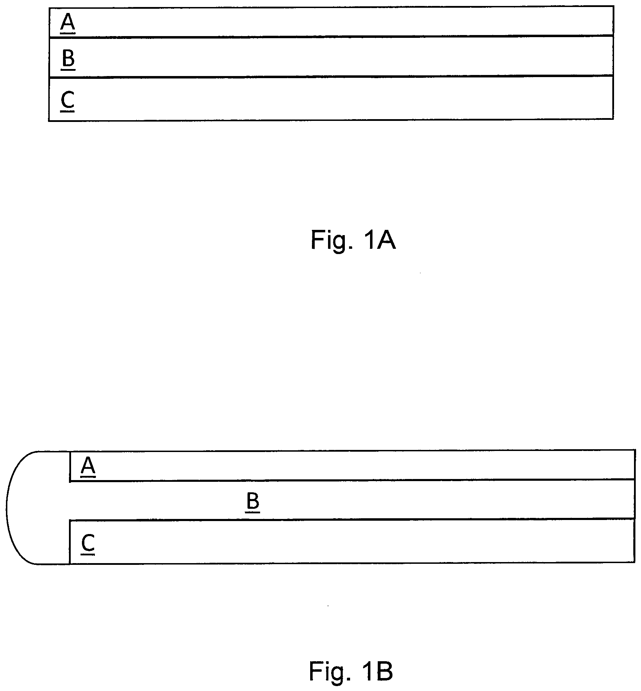

Fig. 1A zeigt in einem Querschnitt einen kartenförmigen Datenträger als Ausgangssituation der vorliegenden Erfindung. Hierbei ist es die Herausforderung, neue, innovative Materialien auf einer Seite der Karte, mit Standard-PVC-Materialien auf der anderen Seite der Karte zu kombinieren. Hierbei sind die in den Fig. 1A und 1B gezeigten Ausführungsvarianten mit entsprechenden Materialkombinationen gezeigt. Hierbei ist Schicht A als ein neuartiges Material ausgeformt, wobei die Schicht beispielsweise aus Kunststoff bzw. PVC hergestellt ist. Schicht A soll neben der Personalisierung auch einen EMV-Chip aufnehmen. Das gezeigte PVC muss neben der Personalisierung Elemente wie Magnetstreifen, Unterschriftsstreifen und Hologramme aufnehmen.

Die gezeigten Anordnungen bzw. Schichtenmodelle sind besonders nachteilig, bei der in Fig. 1A gezeigten Konstruktion, die Laminierung und Stanzung einer Karte aus den beiden Materialien vorgesehen ist, mit dem Nachteil, dass die nachträgliche Applikation von Elementen wie Unterschriftsstreifen oder Hologrammen mittels Hot-Stamp-Technologie aufgrund der nicht planen Oberfläche der eingesetzten Naturmaterialien auf der Gegenseite nicht möglich ist. Hier müsste also mit einem sogenannten "Pre-patched" Hologrammen oder Unterschriftsstreifen gearbeitet werden. Zudem ist aufgrund der unterschiedlichen Materialeigenschaften eine Verwölbung der Karte als Folge des Laminierprozesses zu erwarten.

Die in Fig. 1B gezeigte Konstruktion sieht einen Träger im Kern des Kartenaufbaus zur Aufnahme von einerseits verschiedener Naturmaterialien auf der Vorderseite und andererseits PVC auf der Rückseite der Karte vor. Das ist sehr aufwendig, da insgesamt drei unterschiedliche Baugruppen bzw. Komponenten zur Herstellung der Karte benötigt werden. Ein solcher Träger, wie er in der Schicht B vorgesehen ist, soll vermieden werden, da dieser die Karte unnötig aussteift und zudem ein weiteres Bauelement darstellt, welches wiederum technisch vorgehalten und verarbeitet werden muss.

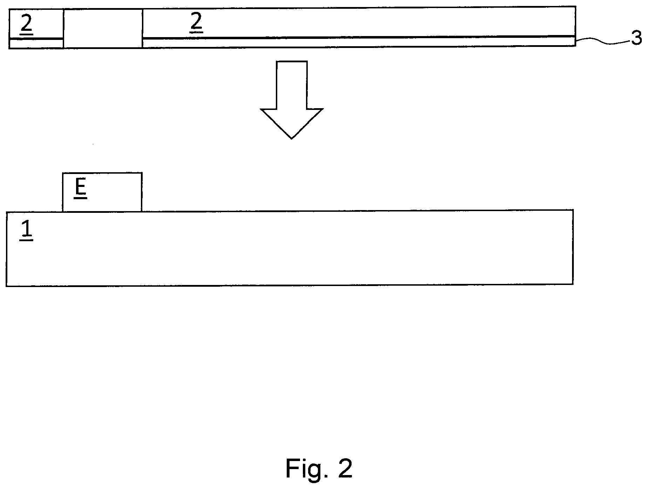

Ferner sind solche Anordnungen, wie sie bereits bekannt sind, mit einem hohen Metallanteil verbunden und sind teilweise nicht ISO-konform. Somit bestehen Einschränkungen bezüglich der Verwendbarkeit alternativer, innovativer, natürlicher Materialien. Diese Nachteile werden erfindungsgemäß überwunden, beispielsweise mittels des vorgeschlagenen Verfahrens bzw. des kartenförmigen Datenträgers, wie er in Fig. 2 gezeigt ist.

Fig. 2 zeigt ein kartenförmiges Dokument bzw. einen kartenförmigen Datenträger gemäß einem Aspekt der vorliegenden Erfindung. Hierbei ist eine erste Komponente 1 vorgesehen, welche als Trägerschicht 1 fungiert, sowie eine zweite Komponente 2, welche als Dekorschicht fungiert. Dazwischen angeordnet ist eine Klebeschicht 3, welche die Dekorschicht 2 mit der Trägerschicht 1 verbindet.

Ferner ist ein Bauelement E vorgesehen, beispielsweise ein elektronisches Bauelement, welches eine Funktionalität des Datenträgers bereitstellt. Beispielsweise kann es sich bei dem elektronischen Bauelement E um ein Chipmodul, also einen Schaltkreis, oder aber auch um einen Speicher, ein Display oder einen Fingerabdrucksensor handeln. Der Fachmann kennt hierbei weitere elektronische Bauelemente, welche erfindungsgemäß vorzuhalten sind. Dies kann beispielsweise auch eine Spule sein, welche der Stromversorgung mittels Induktion der weiteren elektronischen Bauelemente E dient.

Erfindungsgemäß wird ein optimiertes, erweitertes Verfahren zur Herstellung des kartenförmigen Datenträgers vorgeschlagen, welches beispielsweise die folgenden Schritte umfasst:
1. Herstellung einer ersten Komponente bzw. Baugruppe 1 auf Basis bekannter Materialien wie PVC, PC, PETG oder anderer Kunststoffe mit zwei unterschiedlichen Funktionsseiten mittels bekannter Fertigungstechnologien wie z.B. Laminieren und/oder Verkleben in den bekannten ISO-Kartenformaten. Hierbei kann eine Funktionsseite vorgesehen sein, die ein Design aufweist sowie sämtliche bekannte Funktionselemente wie Magnetstreifen, Chipmodule, Unterschriftsstreifen und dergleichen, die nach oder bereits vor dem Laminieren aufgebracht werden können, sowie eine weitere Funktionsseite, welche als Aufnahmeseite bzw. als Träger für eine zweite Komponente bzw. Baugruppe und/oder mit bereits eingebauten, kontaktbehafteten Chipmodulen fungiert. Die Stärke bzw. Dicke dieser Trägerschicht 1 beträgt erfindungsgemäß 500-700 µm.
2. Herstellung einer zweiten, filmähnlichen Komponente bzw. Baugruppe 2 auf Basis innovativer Materialien wie z. B. Holz, Metall, Keramik, Stein und dergleichen mit flexiblen Eigenschaften (Dünnschichtfurnier mit kunststoffähnlichen Eigenschaften), finaler Oberflächenstruktur und im Bedarfsfall mit Hohlraum zur Aufnahme eines kontaktbehafteten Chipmoduls in den bekannten ISO-Kartenformaten. Die Dicke bzw. Stärke einer solchen Dekorschicht 2 kann erfindungsgemäß etwa 100-300 µm betragen.
3. Eine Verbindung der ersten mit der zweiten Komponente über beispielsweise flexible Haftklebstoffe, sogenannte Pressure-sensitive-Adhasivs, oder eine TPU-Schicht, die auf der zweiten Komponente aufgebracht sind. Dies ist vergleichbar mit dem Prinzip des Aufbringens eines Aufklebers bzw. Stickers auf eine Substratoberfläche. Die Dicke der Klebstoffschicht bzw. die Stärke der Klebstoffschicht kann erfindungsgemäß in etwa 10-100 µm betragen.

Dies hat den Vorteil, dass ein hoher Freiheitsgrad hinsichtlich der Verwendung neuer, innovativer Materialien, also Naturmaterialien, besteht. Die Kombination unterschiedlicher, innovativer Naturmaterialien ist mit Standardmaterialien möglich, welche nicht in gesonderten Herstellungsprozessen hergestellt werden müssen. Ferner besteht eine hohe Flexibilität der Verbindung zwischen Baugruppe 1 und Baugruppe 2, also zwischen der Trägerschicht 1 und der Dekorschicht 2. Somit überträgt sich auch diese hohe Flexibilität auf das Endprodukt, nämlich auf die vorgeschlagene Kreditkarte bzw. den kartenförmigen Datenträger.

Fig. 2 zeigt einen Aspekt der vorliegenden Erfindung mit einem Chipmodul auf Seiten des neuen, innovativen Kartenmaterials, nämlich dem Naturmaterial, vor Verbindung von Komponente 1 mit Komponente 2, also der Trägerschicht 1 mit der Dekorschicht 3. Hierzu ist ein elektronisches Bauelement E, beispielsweise ein Kontaktchip, auf der ersten Komponente angebracht, und in der zweiten Komponente, also der Dekorschicht 2, ist eine Aussparung vorgesehen, in die das elektronische Bauelement E formschlüssig eingepasst wird. Somit ist auch die Klebeschicht 3 mindestens an dieser Stelle unterbrochen. Ferner gezeigt in Fig. 2 ist eine flächig ausgeformte Klebeschicht 3, welche die Komponente 1 mit der Komponente 2 verbindet. Somit ist es erfindungsgemäß möglich, die Komponente 1, also die Trägerschicht 1, und die Komponente 2, also die Dekorschicht 2, gesondert bereitzustellen, wobei auch bezüglich der Komponente 1 auf eine herkömmliche Trägerschicht zurückgegriffen werden kann. Erst bei dem erfindungsgemäßen Herstellungsprozess werden die Komponenten derart zusammengefügt, dass das vorgeschlagene Wertdokument bzw. der kartenförmige Datenträger entsteht.

Somit ist in Fig. 2 gezeigt, dass die jeweiligen Schichten 1 und 2 noch separiert sind, und erst in darauffolgenden Verfahrensschritten zusammengefügt bzw. verklebt werden.

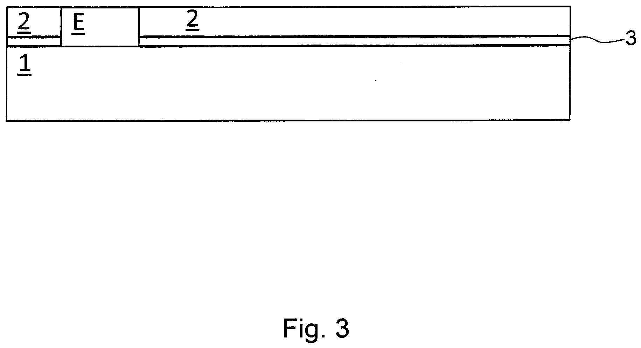

Fig. 3 zeigt einen kartenförmigen Datenträger mit natürlichen Materialien gemäß einem Aspekt der vorliegenden Erfindung. Der Datenträger umfasst eine kartenförmige Trägerschicht 1 und eine kartenförmige Dekorschicht 2, wobei die Dekorschicht 2 ein natürliches Material aufweist und auf die Trägerschicht 1 aufgeklebt ist.

Ferner ist in Fig. 3 gezeigt, dass das elektronische Bauelement E formschlüssig in die Dekorschicht 2 eingebracht ist. Hierbei handelt es sich beispielsweise um einen Kontaktchip, der einen physischen Kontakt mit einer weiteren Komponente benötigt, um Daten auszutauschen. Dies ist erfindungsgemäß derart gelöst, dass die Oberfläche der Dekorschicht durchbrochen ist, und der Kontakt formschlüssig in die Dekorschicht derart eingebracht ist, dass diese von außerhalb des kartenförmigen Datenträgers kontaktierbar bzw. berührbar ist.

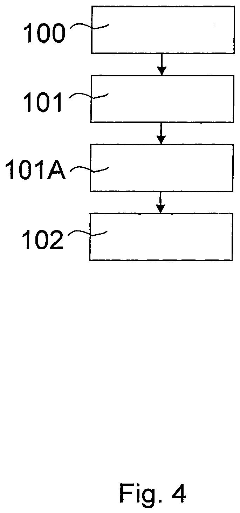

Fig. 4 zeigt ein Verfahren zum Herstellen eines kartenförmigen Datenträgers mit natürlichen Materialien, mit den Schritten eines Bereitstellens 100 einer kartenförmigen Trägerschicht 1 und eines Bereitstellens 101 einer kartenförmigen Dekorschicht 2, wobei die Dekorschicht 2 mindestens ein natürliches Material aufweist und auf die Trägerschicht 1 aufgeklebt 102 ist. Hierbei erkennt der Fachmann, dass weitere Verfahrensschritte vorgesehen sein können, und insbesondere dass die Verfahrensschritte iterativ und/oder in anderer Reihenfolge ausgeführt werden können. Ferner kann es vorgesehen sein, dass das Bereitstellen 100 der kartenförmigen Trägerschicht 1 ein Laminieren 101A umfasst.

## Patentansprüche

1. Verfahren zum Herstellen eines kartenförmigen Datenträgers mit natürlichen Materialien, mit den Schritten:
- Bereitstellen (100) einer kartenförmigen Trägerschicht (1); und
- Bereitstellen (101) einer kartenförmigen Dekorschicht (2), wobei: die Dekorschicht (2) mindestens ein natürliches Material aufweist und auf die Trägerschicht (1) aufgeklebt (102) wird,
- das natürliche Material als Holz, Metall, Keramik oder Stein vorliegt,
- das Aufkleben (102) mittels eines Haftklebestoffs erfolgt, **dadurch gekennzeichnet, dass** der Haftklebestoff eine flexible Klebeschicht (3) zwischen der Trägerschicht (1) und der Dekorschicht (2) ausformt,
wobei die Trägerschicht (1) eine Dicke von ca. 500-700 µm , die Dekorschicht (2) eine Dicke von ca. 100-300 µm und/oder die Klebeschicht (3) eine Dicke von ca. 10-100 µm aufweist.

2. Verfahren nach Anspruch 1, **dadurch gekennzeichnet, dass** die Trägerschicht (1) mindestens ein funktionales Element (E) aus einer Gruppe von Elementen (E) aufweist, die Gruppe umfassend: einen Magnetstreifen, ein Chipmodul, einen Unterschriftsstreifen, eine Spule, einen Speicher und/ oder einen Schaltkreis.

3. Verfahren nach Anspruch 1 oder 2, **dadurch gekennzeichnet, dass** die Trägerschicht (1) mehrere Lagen umfasst, welche zusammen laminiert (101A) werden.

4. Verfahren nach einem der vorhergehenden Ansprüche, **dadurch gekennzeichnet, dass** die Trägerschicht (1) funktionale Elemente (E) aufweist, welche jeweils vor oder nach einem Laminieren in die Trägerschicht (1) eingebracht werden.

5. Verfahren nach einem der vorhergehenden Ansprüche, **dadurch gekennzeichnet, dass** die Dekorschicht (2) filmähnlich ausgestaltet wird.

6. Verfahren nach einem der vorhergehenden Ansprüche, **dadurch gekennzeichnet, dass** die Dekorschicht (2) biegsam ausgestaltet wird.

7. Verfahren nach einem der vorhergehenden Ansprüche, **dadurch gekennzeichnet, dass** die Dekorschicht (2) als Dünnschichtfurnier bereitgestellt (101) wird.

8. Verfahren nach einem der vorhergehenden Ansprüche, **dadurch gekennzeichnet, dass** die Trägerschicht (1) und/ oder die Dekorschicht (2) mindestens einen Hohlraum zur Aufnahme eines elektronischen Bauelements aufweist.

9. Kartenförmiger Datenträger mit natürlichen Materialien, mit:
- einer kartenförmigen Trägerschicht (1); und
- einer kartenförmigen Dekorschicht (2), wobei: die Dekorschicht (2) mindestens ein natürliches Material aufweist und auf die Trägerschicht (1) aufgeklebt ist,
- das natürliche Material als Holz, Metall, Keramik oder Stein ist,
- das Aufkleben (102) mittels eines Haftklebestoffs erfolgt,
- der Haftklebestoff eine flexible Klebeschicht (3) zwischen der Trägerschicht (1) und der Dekorschicht (2) ausformt,
**dadurch gekennzeichnet, dass**
die Trägerschicht (1) eine Dicke von ca. 500-700 µm, die Dekor-schicht (2) eine Dicke von ca. 100-300 µm und/oder die Klebeschicht (3) eine Dicke von ca. 10-100 µm aufweist.

## Claims

1. A method for manufacturing a card-shaped data carrier with natural materials, with the steps of:
- supplying (100) a card-shaped carrier layer (1); and
- supplying (101) a card-shaped decorative layer (2), wherein the decorative layer (2) has at least one natural material and is bonded (102) onto the carrier layer (1),
- the natural material is present as wood, metal, ceramic or stone,
- the bonding (102) takes place by means of an adhesive bonding, **characterized in that** the adhesive bonding forms a flexible bonding layer (3) between the carrier layer (1) and the decorative layer (2),
wherein the carrier layer (1) has a thickness of approximately 500-700 µm, the decorative layer (2) has a thickness of approximately 100-300 µm and/or the bonding layer (3) has a thickness of approximately 10-100 µm.

2. The method according to claim 1, **characterized in that** the carrier layer (1) has at least one functional element (E) from a group of elements (E), the group comprising: a magnetic strip, a chip module, a signature strip, a coil, a memory and/or a circuit.

3. The method according to claim 1 or 2, **characterized in that** the carrier layer (1) comprises several plies which are laminated (101A) together.

4. The method according to any of the preceding claims, **characterized in that** the carrier layer (1) has functional elements (E) which are introduced into the carrier layer (1) respectively before or after a lamination.

5. The method according to any of the preceding claims, **characterized in that** the decorative layer (2) is configured in a film-like manner.

6. The method according to any of the preceding claims, **characterized in that** the decorative layer (2) is configured to be bendable.

7. The method according to any of the preceding claims, **characterized in that** the decorative layer (2) is supplied (101) as a thin-film veneer.

8. The method according to any of the preceding claims, **characterized in that** the carrier layer (1) and/or the decorative layer (2) has at least one cavity for receiving an electronic component.

9. A card-shaped data carrier with natural materials, having:
- a card-shaped carrier layer (1); and
- a card-shaped decorative layer (2), wherein the decorative layer (2) has at least one natural material and is bonded onto the carrier layer (1),
- the natural material is of wood, metal, ceramic or stone,
- the bonding (102) takes place by means of an adhesive bonding,
- the adhesive bonding forms a flexible bonding layer (3) between the carrier layer (1) and the decorative layer (2),
**characterized in that** the carrier layer (1) has a thickness of approximately 500-700 µm, the decorative layer (2) has a thickness of approximately 100-300 µm and/or the bonding layer (3) has a thickness of approximately 10-100 µm.

## Revendications

1. Procédé de fabrication d'un support de données en forme de carte avec des matériaux naturels, comprenant les étapes :
- mise à disposition (100) d'une couche support (1) en forme de carte ; et
- mise à disposition (101) d'une couche décor (2) en forme de carte, cependant que : la couche décor (2) comporte au moins un matériau naturel et est collée (102) sur la couche support (1),
- le matériau naturel se trouve sous forme de bois, métal, céramique ou pierre,
- le collage (102) a lieu au moyen d'une colle adhésive,
**caractérisé en ce que** la colle adhésive forme une couche de colle (3) flexible entre la couche support (1) et la couche décor (2),
cependant que la couche support (1) a une épaisseur d'environ 500 à 700 µm, la couche décor (2) une épaisseur d'environ 100 à 300 µm et/ou la couche de colle (3) une épaisseur d'environ 10 à 100 µm.

2. Procédé selon la revendication 1, **caractérisé en ce que** la couche support (1) comporte au moins un élément fonctionnel (E) d'un groupe d'éléments (E), le groupe comprenant : une bande magnétique, un module puce, une bande de signature, une bobine, une mémoire et/ou un circuit.

3. Procédé selon la revendication 1 ou 2, **caractérisé en ce que** la couche support (1) comprend plusieurs strates qui sont laminées (101A) ensemble.

4. Procédé selon une des revendications précédentes, **caractérisé en ce que** la couche support (1) comporte plusieurs éléments fonctionnels (E) qui sont respectivement incorporés dans la couche support (1) avant ou après un laminage.

5. Procédé selon une des revendications précédentes, **caractérisé en ce que** la couche décor (2) est réalisée sous forme s'apparentant à un film.

6. Procédé selon une des revendications précédentes, **caractérisé en ce que** la couche décor (2) est réalisée sous forme souple.

7. Procédé selon une des revendications précédentes, **caractérisé en ce que** la couche décor (2) est mise à disposition (101) sous forme de placage en couche mince.

8. Procédé selon une des revendications précédentes, **caractérisé en ce que** la couche support (1) et/ou la couche décor (2) comporte au moins un espace creux pour la réception d'un composant électronique.

9. Support de données en forme de carte ayant des matériaux naturels, comprenant :
- une couche support (1) en forme de carte ; et
- une couche décor (2) en forme de carte, cependant que :
la couche décor (2) comporte au moins un matériau naturel et est collée sur la couche support (1),
- le matériau naturel est en bois, métal, céramique ou pierre,
- le collage (102) a lieu au moyen d'une colle adhésive,
- la colle adhésive forme une couche de colle (3) flexible entre la couche support (1) et la couche décor (2),
**caractérisé en ce que**
la couche support (1) a une épaisseur d'environ 500 à 700 µm, la couche décor (2) une épaisseur d'environ 100 à 300 µm et/ou la couche de colle (3) une épaisseur d'environ 10 à 100 µm.
